# DEMANDE DE BREVET EUROPEEN

(11) **EP 2 280 123 A1**
(43) Date de publication de la demande: **02.02.2011**
(21) Numéro de dépôt: 10352002.9
(22) Date de dépôt: 20.07.2010
(51) Int. Cl.: E03C 1/02, F16L 5/00

(54) **Dispositif et procédé de raccordement d'une conduite à la traversée d'une paroi**

(30) Priorité: 23.07.2009 FR 0903631
(71) Demandeur: T.P.S. Toulouse Prefabrication Sanitaire, 31320 Castanet Tolosan (FR)
(72) Inventeur: Gonzales, Grégoire, 31320 Castanet Tolosan (FR)
(74) Mandataire: Hartmann, Jean-Luc

(57) **Abrégé**

L'invention concerne un dispositif de raccordement d'au moins une conduite (1) à la traversée d'une paroi (2), comprenant : au moins un élément de raccordement (3) comportant une partie arrière (7) adaptée pour être montée sur une extrémité libre de la conduite ; une platine (4) adaptée pour être fixée contre une face frontale (14) de la paroi, ladite platine comportant au moins une lumière de raccordement (11) présentant d'une part une ouverture de fixation (13), adaptée pour permettre la fixation de l'élément de raccordement (3) dans une position de fixation, et d'autre part une ouverture de montage (12), de plus grande dimension que l'ouverture de fixation et adaptée pour permettre le passage de l'élément de raccordement dans son intégralité. L'invention s'étend à un procédé de raccordement et à un procédé de visite ou de démontage d'un dispositif de raccordement.

## Description

La présente invention concerne dispositif de raccordement d'une conduite, notamment une conduite sanitaire, à la traversée d'une paroi. L'invention concerne également un procédé de raccordement d'une conduite, à la traversée d'une paroi.

EP 1 348 815 décrit un dispositif pour le montage et le raccordement d'une conduite sanitaire installée à l'intérieur d'une cloison, à l'arrière d'une paroi extérieure de cette dernière, comprenant :
- un élément de raccordement destiné être agencé dans une découpe de la paroi extérieure, ladite découpe ayant une taille suffisante pour permettre la mise en place de l'élément de raccordement ; cet élément de raccordement comporte une partie arrière destinée à être raccordée à une extrémité libre de la conduite et à s'étendre à l'arrière de la paroi extérieure, et une partie avant pourvue d'un taraudage ;
- une platine destinée à être fixée contre une face frontale de la paroi extérieure, laquelle platine présente un passage traversant au travers duquel seule la partie avant de l'élément de raccordement peut être engagée ; ce passage est de taille inférieure à celle de la découpe ménagée dans la paroi extérieure, la platine ayant pour double fonction de supporter l'élément de raccordement et de venir obturer la découpe de la paroi autour de cet élément,
- des moyens pour la fixation de la partie avant de l'élément de raccordement sur la platine.

Le montage d'un tel dispositif est relativement aisé, et l'utilisation d'une platine permet d'obturer de façon propre et rapide la découpe ménagée dans la paroi extérieure. La paroi extérieure et la platine sont ensuite traditionnellement recouvertes d'un revêtement de finition tel que des carreaux de faïence ou de carrelage, des plaques en contreplaqué ou mélaminé, des plaques en matière synthétique telle que PVC...

Cependant, ce dispositif connu présente les inconvénients suivants. En premier lieu, pour pouvoir monter un robinet à raccord femelle (tel un robinet de douche par exemple, doté d'écrous prisonniers) sur un tel dispositif, il est nécessaire d'utiliser un deuxième élément de raccordement venant se fixer sur la partie avant de l'élément de raccordement du dispositif de EP 1 348 815. En effet, cette partie avant ne dépasse que peu de la paroi extérieure et n'est pourvue que d'un taraudage (raccord femelle). Un élément de raccordement supplémentaire mâle/mâle doit donc être intercalé entre l'élément de raccordement du dispositif de EP 1 348 815 et le raccord femelle du robinet, ce qui multiplie les risques de fuite.

En second lieu, lorsqu'une fuite apparaît au niveau de l'élément de raccordement du dispositif de EP 1 348 815 ou lorsque cet élément doit être contrôlé ou changé pour diverses raisons, il convient de déposer la platine pour pouvoir extraire ledit élément de raccordement hors de la cloison. A cette fin, il est préalablement nécessaire de retirer le revêtement de finition qui recouvre la platine. En d'autres termes, le carrelage recouvrant la platine doit être cassé ou le panneau découpé autour de celle-ci. Une fois l'élément de raccordement contrôlé, changé ou réparé, la platine doit de nouveau être mise en place et cachée. A cette occasion, il est généralement nécessaire de refaire intégralement le revêtement de finition de la cloison concernée. La visite, la réparation ou le changement de l'élément de raccordement entraîne alors d'importants frais en termes de matériaux et de main d'oeuvre.

L'invention vise à pallier ces inconvénients en proposant un dispositif pour le raccordement d'une conduite à la traversée d'une paroi, dont le montage est aisé et dont le démontage peut s'effectuer sans détérioration du revêtement de finition recouvrant ladite paroi. L'invention vise également à proposer un procédé de raccordement qui soit simple et permette un démontage sans détérioration du revêtement de finition de la paroi.

Dans une version préférée, l'invention vise également à fournir un dispositif et un procédé de raccordement avec lesquels les risques de fuite sont réduits.

Pour ce faire, l'invention propose un dispositif de raccordement pour le raccordement d'au moins une conduite, telle qu'une conduite sanitaire, à la traversée d'une paroi, en particulier d'une paroi extérieure d'une cloison. Ce dispositif comprend :
- au moins un élément de raccordement comportant d'une part une partie arrière adaptée pour être montée sur une extrémité libre de la conduite, et d'autre part une partie avant,
- une platine adaptée pour être fixée contre une face frontale de la paroi, ladite platine présentant au moins une lumière, dite lumière de raccordement, destinée à recevoir l'élément de raccordement.

Le dispositif selon l'invention est **caractérisé en ce que** ladite lumière de raccordement présente :
- une portion, dite ouverture de fixation, adaptée pour permettre la fixation de l'élément de raccordement dans une position, dite position de fixation, dans laquelle sa partie arrière s'étend à l'arrière de la platine et sa partie avant s'étend à l'avant de la platine,
- une portion, dite ouverture de montage, de plus grande dimension que l'ouverture de fixation et adaptée pour permettre le passage de l'élément de raccordement dans son intégralité.

L'invention propose également un procédé de raccordement d'au moins une conduite s'étendant à l'arrière d'une paroi, dans lequel :
- on ramène une extrémité libre de la conduite à l'avant de la paroi, en passant ladite extrémité libre à travers une découpe préalablement ménagée dans ladite paroi,
- on raccorde une partie arrière d'un élément de raccordement à cette extrémité libre de la conduite,
- on utilise une platine qui est adaptée pour être fixée contre une face frontale de la paroi et qui présente au moins une lumière, dite lumière de raccordement, destinée à recevoir l'élément de raccordement,
**caractérisé en ce que** :
- on utilise une platine dont la lumière de raccordement présente
   ◆ une portion, dite ouverture de fixation, adaptée pour permettre la fixation de l'élément de raccordement dans une position, dite position de fixation, dans laquelle la partie arrière de l'élément de raccordement s'étend à l'arrière de la platine et une partie avant dudit élément de raccordement s'étend à l'avant de la platine,
   ◆ une portion, dite ouverture de montage, de plus grande dimension que l'ouverture de fixation et adaptée pour permettre le passage de l'élément de raccordement dans son intégralité,
- on insère l'élément de raccordement dans l'ouverture de montage et on déplace l'élément de raccordement depuis cette ouverture de montage vers l'ouverture de fixation, de façon à placer l'élément de raccordement dans sa position de fixation,
- on fixe la platine contre la face frontale de la paroi.

Une fois la platine fixée à la paroi, il est tout à fait possible de déplacer en sens inverse l'élément de raccordement. L'invention s'étend ainsi à un procédé de visite ou de démontage d'un dispositif de raccordement selon l'invention, dans lequel on déplace l'élément de raccordement depuis sa position de fixation vers l'ouverture de montage et on extrait l'élément de raccordement (relié à la conduite) hors de la platine par ladite ouverture de montage.

En d'autres termes, la visite ou le démontage de l'élément de raccordement s'effectue sans qu'il ne soit nécessaire de retirer la platine (celle-ci reste fixée à la paroi) ni le revêtement de finition qui la recouvre. Les opérations de visite, de réparation ou de remplacement de l'élément de raccordement en sont facilitées et n'engendrent aucun frais relatif à la remise en état du revêtement de finition.

Avantageusement, la lumière de raccordement de la platine présente la forme d'un trou de serrure, l'ouverture de montage étant globalement circulaire et l'ouverture de fixation étant globalement rectangulaire.

Avantageusement, le dispositif selon l'invention comprend des moyens de fixation de l'élément de raccordement à la platine.

Dans une première forme de réalisation, ces moyens de fixation comprennent :
- une collerette formée sur l'élément de raccordement et adaptée pour venir en appui contre une face arrière de la platine lorsque l'élément de raccordement est en position de fixation ; en variante, l'élément de raccordement comprend une partie centrale dans laquelle sont ménagées deux fentes latérales en regard transversalement l'une de l'autre, lesdites fentes étant adaptées pour recevoir deux bords opposés de l'ouverture de fixation,
- un écrou adapté pour être vissé sur un filetage extérieur correspondant ménagé sur la partie avant de l'élément de raccordement et pour venir pincer la platine en coopération avec la collerette ou, dans la variante susmentionnée, avec une face postérieure de chacune des fentes.

Le procédé de raccordement selon l'invention comprend alors la ou les étapes suivantes :
- le cas échéant, pour le placement de l'élément de raccordement en position de fixation, on insère et on fait coulisser les bords de l'ouverture de fixation dans les fentes latérales de l'élément de raccordement,
- lorsque l'élément de raccordement est en position de fixation, on visse l'écrou sur le filetage extérieur de l'élément de raccordement, jusqu'à ce que ledit écrou et la collerette ou la face postérieure des fentes latérales de l'élément de raccordement viennent pincer la platine.

Le procédé de visite ou de démontage du dispositif selon l'invention comprend en outre l'étape suivante : on dévisse l'écrou de façon à libérer la platine ; de préférence, on le dévisse jusqu'à le séparer de l'élément de raccordement. Avantageusement, l'écrou présente à cette fin une épaisseur supérieure à celle d'un revêtement de finition usuel et une zone de préhension destinée à s'étendre en saillie à l'avant du tel revêtement de finition.

Dans une deuxième forme de réalisation possible, les moyens de fixation de l'élément de raccordement à la platine comprennent deux collerettes formées sur l'élément de raccordement et destinées à s'étendre de part et d'autre de la platine, l'écartement entre ces collerettes étant adapté pour permettre à la fois l'insertion entre les collerettes d'au moins deux bords opposés de l'ouverture de fixation et un maintien ferme de l'élément de raccordement sur la platine en position de fixation. Le placement de l'élément de raccordement en position de fixation s'effectue comme précédemment expliqué dans le cas d'un élément de raccordement à fentes latérales. En variante, l'élément de raccordement comprend une partie centrale dans laquelle sont ménagées deux fentes latérales en regard transversalement l'une de l'autre, la largeur desdites fentes étant adaptée pour permettre à la fois l'insertion dans les fentes de deux bords opposés de l'ouverture de fixation et un maintien ferme de l'élément de raccordement sur la platine en position de fixation.

Avec cette deuxième forme de réalisation ou avec la variante correspondante, il n'est pas indispensable d'utiliser un écrou. Toutefois, un tel écrou peut être ajouté à l'instar de la première forme de réalisation afin de garantir une fixation ferme et pérenne de l'élément de raccordement sur la platine en position de fixation.

Dans ces deux formes de réalisation et dans leur variante, l'ouverture de fixation présente une largeur inférieure au diamètre de la ou des collerettes ou de la partie centrale de l'élément de raccordement, afin de permettre à chaque collerette ou à la face arrière des fentes de prendre appui contre la platine au bord de l'ouverture de fixation. A l'inverse, l'ouverture de montage présente une dimension minimale supérieure au diamètre de chaque collerette ou de la partie centrale de l'élément de raccordement, afin de permettre le passage -à travers ladite ouverture de montage- de l'élément de raccordement.

Avantageusement, l'élément de raccordement est formé d'une seule pièce.

Avantageusement, la partie avant de l'élément de raccordement présente un filetage extérieur et une longueur adaptés pour permettre le montage direct d'un robinet à raccord femelle (de type écrou prisonnier).

En variante, la partie avant de l'élément de raccordement présente un taraudage pour le montage direct d'un robinet à raccord mâle. La partie avant peut dans ce cas également comprendre un filetage extérieur pour le montage par vissage, sur l'élément de raccordement, d'un cache tel que défini plus loin ou éventuellement pour le montage direct d'un robinet à raccord femelle.

Dans une version préférée, le dispositif selon l'invention comporte une zone tubulaire cylindrique de section circulaire dans laquelle sont ménagés à la fois, d'une part un filetage extérieur (pour la fixation d'un robinet et/ou pour le montage d'un cache), et d'autre part deux fentes latérales en regard transversalement l'une de l'autre à l'arrière dudit filetage, lesdites fentes étant adaptées pour recevoir deux bords opposés de l'ouverture de fixation.

Avantageusement, le dispositif selon l'invention comporte un cache adapté pour être monté sur la partie avant de l'élément de raccordement et pour venir obturer totalement la lumière de raccordement lorsque l'élément de raccordement est en position de fixation.

La présente invention s'étend à un dispositif, un procédé de raccordement et un procédé de visite ou de démontage caractérisés par toute combinaison des caractéristiques mentionnées ci-dessus et ci-après comportant au moins une platine dont la lumière de montage présente une ouverture de montage et une ouverture de fixation telles que précédemment définies.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- la figure 1 est une vue de face d'un mode de réalisation d'une platine d'un dispositif de raccordement selon l'invention,
- la figure 2 est une vue de face d'un autre mode de réalisation d'une platine d'un dispositif de raccordement selon l'invention,
- la figure 3 est une vue de profil d'un mode de réalisation d'un élément de raccordement d'un dispositif selon l'invention,
- la figure 4 est une vue de profil d'un autre mode de réalisation d'un élément de raccordement d'un dispositif selon l'invention,
- la figure 5 est une vue en perspective de la platine de la figure 2 et de l'élément de raccordement de la figure 3, dans laquelle l'élément de raccordement est inséré dans une ouverture de montage d'une lumière de raccordement de la platine,
- la figure 6 est une vue en perspective des éléments de la figure 5, dans laquelle l'élément de raccordement est enclenché dans une ouverture de fixation de la lumière de raccordement,
- la figure 7 est une vue en perspective des éléments de la figure 6 comprenant de plus un écrou en cours d'agencement sur l'élément de raccordement,
- la figure 8 est une vue en perspective des éléments de la figure 7 comprenant de plus un cache en cours d'agencement sur l'élément de raccordement,
- la figure 9 est une vue en perspective des éléments de la figure 8 comprenant de plus un robinet,
- la figure 10 est une vue en perspective de la platine de la figure 2 et de l'élément de raccordement de la figure 3 illustrant l'extraction de l'élément de raccordement hors de la platine,
- la figure 11 est une vue en coupe longitudinale du dispositif de raccordement illustré sur les figures 2, 3 et 5 à 10, lequel dispositif est observé en position de fixation dans une cloison.

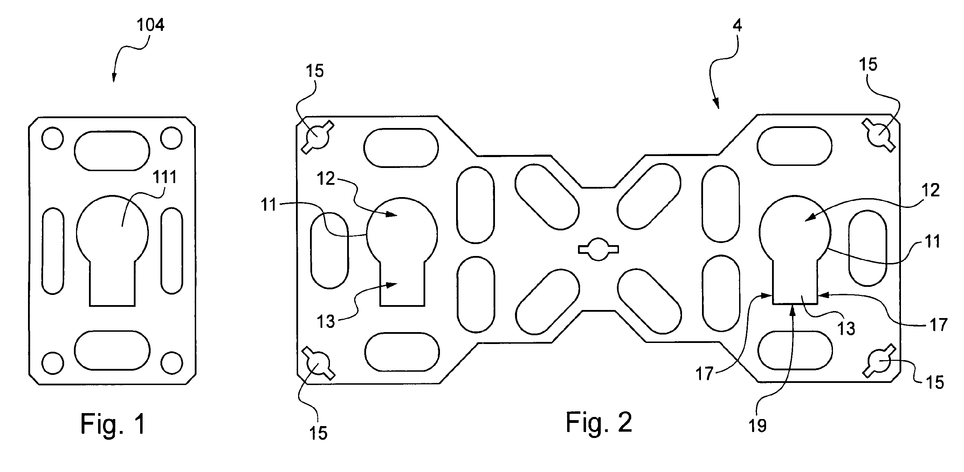

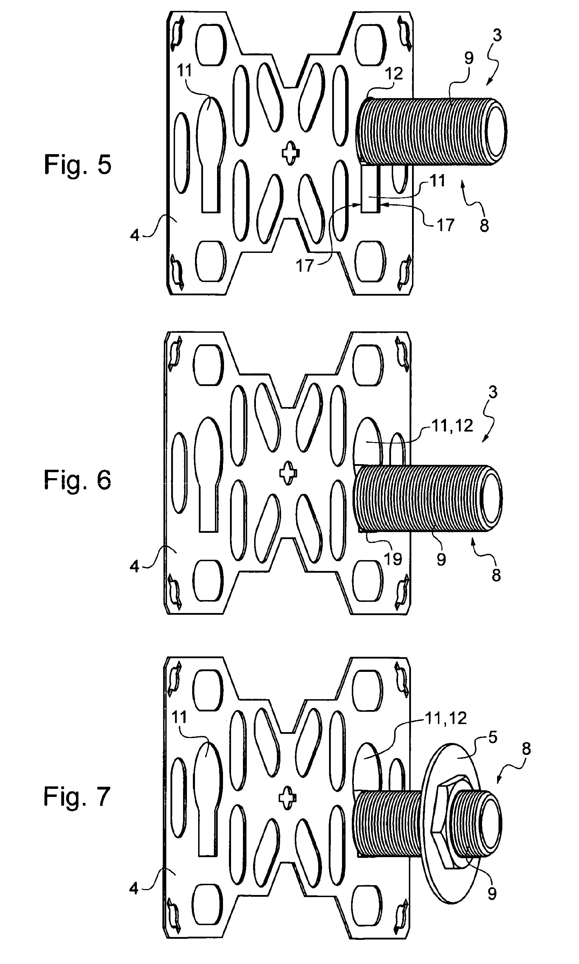

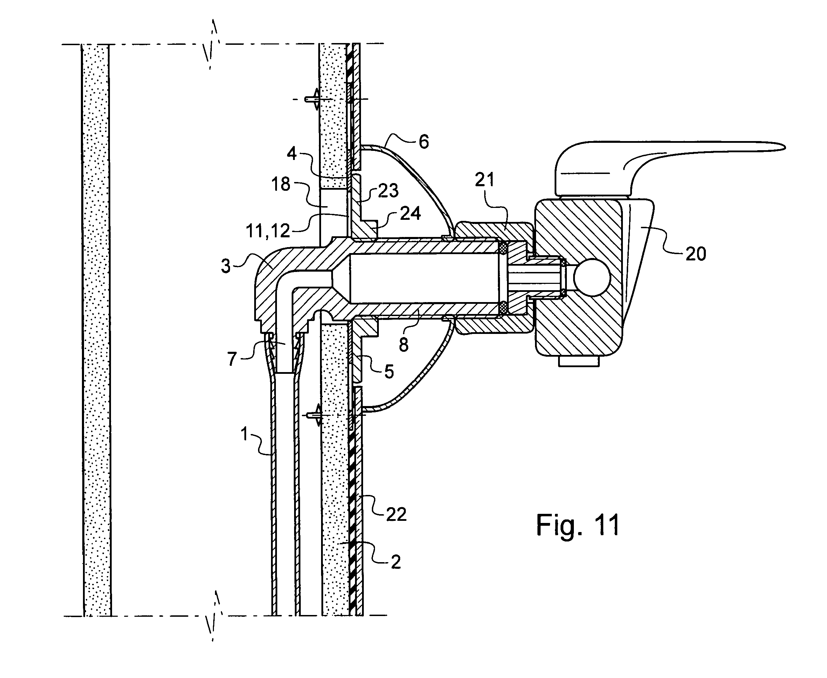

Le dispositif de raccordement illustré sur les figures 2, 3 et 5 à 11 est adapté pour permettre le raccordement de deux conduites sanitaires 1, telles une conduite d'eau chaude et une conduite d'eau froide, à un robinet mélangeur ou mitigeur 20 (en l'exemple illustré, il s'agit d'un robinet de douche). Chaque conduite 1 est agencée à l'arrière d'une paroi 2 (voir figure 11) et est par exemple formée par une canalisation rigide prolongée par un tube souple en PER (polyéthylène réticulé), la jonction entre ladite canalisation et ledit tube PER s'effectuant de façon connue et n'étant pas décrite ici.

Le dispositif de raccordement selon l'invention illustré sur les figures 2, 3 et 5 à 11 comprend une platine 4 et deux éléments de raccordement 3 (un pour chaque conduite 1). Il comprend de plus avantageusement un écrou 5 et un cache 6 pour chacun des éléments de raccordement. Par souci de simplicité et de concision, un seul ensemble {conduite sanitaire 1, élément de raccordement 3, écrou 5, cache 6} est décrit ci-après, les deux ensembles du dispositif étant identiques.

L'élément de raccordement 3 est avantageusement constitué d'une seule pièce. Il comporte une partie arrière 7 adaptée pour être montée sur l'extrémité libre de la conduite sanitaire 1. En l'exemple illustré, cette partie arrière 7 est pourvue d'une pluralité d'épaulements tronconiques (voir figure 11) pour le sertissage d'un tube PER 13/16 formant le tronçon extrême de la conduite. Lorsque l'élément de raccordement est dans une position, dite position de fixation, correspondant à sa position définitive d'installation et de fonctionnement (voir figure 11), sa partie arrière 7 s'étend à l'arrière de la platine 4 et de la paroi 2.

L'élément de raccordement 3 comporte d'autre part une partie avant 8 cylindrique de section circulaire, pourvue d'un filetage 9 extérieur (raccord mâle). Ce filetage 9 s'étend à l'avant de la paroi 2 lorsque l'élément de raccordement est en position de fixation. Il est avantageusement adapté pour correspondre au taraudage (raccord femelle) d'un écrou prisonnier 21 du robinet 20 qui en l'exemple est de type 20/27.

Un seul élément de raccordement (l'élément 3) permet ainsi de raccorder une conduite sanitaire 1 à un robinet, alors que deux éléments étaient nécessaires dans les dispositifs antérieurs connus. Deux joints sont ainsi supprimés. Il en résulte une diminution des risques de fuite au niveau du dispositif de raccordement selon l'invention.

A l'arrière du filetage 9, dans une partie centrale 16 de l'élément de raccordement qui prolonge la partie avant 8 et est également cylindrique de section circulaire, sont ménagées deux fentes latérales 10 en regard transversalement l'une de l'autre. Lorsque l'élément de raccordement est en position de fixation, ces fentes s'étendent verticalement et au niveau de la platine 4, comme expliqué plus loin.

La partie centrale 16 et la partie arrière 7 de l'élément de raccordement 3 sont reliées par un coude 25. Un tel élément de raccordement 3 permet donc le raccordement d'une conduite 1 s'étendant parallèlement à la paroi 2, par exemple à l'intérieur d'une cloison, la paroi 2 correspondant alors à une paroi extérieure (telle une plaque de parement à base de plâtre) de la cloison.

Par ailleurs, la platine 4 comporte deux lumières de raccordement 11 qui présentent la forme d'un trou de serrure : chacune de ces lumières comporte en effet une portion circulaire 12, dite ouverture de montage, et une portion 13 sensiblement rectangulaire ou à tout le moins oblongue, dite ouverture de fixation. Chaque lumière de raccordement 11 est destinée à recevoir un élément de raccordement 3. Les deux lumières étant identiques, une seule d'entre elle est considérée par la suite.

La platine 4 est de plus adaptée pour être fixée contre la face frontale 14 de la paroi 2, dans une position dans laquelle l'ouverture de fixation 13 s'étend en dessous de l'ouverture de montage 12. A cette fin, la platine 4 présente par exemple des perçages 15 de réception de vis de fixation ou de rivets.

Les dimensions de l'ouverture de montage 12 sont adaptées pour permettre le passage, à travers ladite ouverture, de l'élément de raccordement 3 dan son intégralité. En l'exemple illustré, le diamètre de l'ouverture de montage 12 est par conséquent supérieur au diamètre extérieur des parties avant et centrale de l'élément de raccordement (qui constituent les parties les plus larges dudit élément).

Par ailleurs, les dimensions de l'ouverture de fixation 13 sont adaptées pour permettre la fixation de l'élément de raccordement 3 à la platine 4. En l'exemple illustré, la largeur de l'ouverture de fixation 13 est supérieure à la distance séparant les deux fentes latérales 10 mais est inférieure au diamètre de la partie centrale 16 de l'élément de raccordement. De la sorte, les bords latéraux 17 délimitant l'ouverture de fixation 13 peuvent être insérés dans les fentes 10.

En outre, l'écrou 5 présente une dimension transversale maximale supérieure à la largeur de l'ouverture de fixation 13 pour pouvoir prendre appui sur la face avant de la platine 4, au niveau des bords latéraux 17 et d'un bord inférieur 19 de l'ouverture de fixation, lorsqu'il est vissé sur l'élément de raccordement 3 en position de fixation. En l'exemple illustré, l'écrou 5 comporte avantageusement une embase 23 arrière pour son appui sur la platine 4, et une zone de préhension 24 avant hexagonale pour sa manipulation. De préférence, l'embase 23 présente un diamètre suffisant pour venir masquer la lumière de raccordement 11 de la platine lorsque l'écrou est vissé sur l'élément de raccordement 3 en position de fixation.

Par ailleurs, le cache 6 présente de préférence une face extérieure périphérique globalement tronconique. Son grand diamètre est avantageusement suffisant pour permettre de coiffer l'écrou 5 (et notamment son embase 23) et d'obturer totalement la lumière de raccordement 11 de la platine lorsqu'il est monté sur l'élément de raccordement 3 et que ce dernier est en position de fixation.

Le dispositif de raccordement selon l'invention et le robinet 20 s'installent comme suit :
- à l'aide d'une scie cloche par exemple, on réalise une découpe 18 dans la paroi 2 sensiblement en regard de l'extrémité libre de la conduite sanitaire 1 (voir figure 11). Cette découpe 18 présente un diamètre au moins égal à la plus grande dimension, en l'occurrence la hauteur, de la lumière de raccordement 11 de la platine ;
- on ramène, à l'avant de la paroi 2, l'extrémité libre de la conduite sanitaire 1, et on monte la partie arrière 7 de l'élément de raccordement sur cette extrémité libre ;
- on insère l'élément de raccordement 3 dans l'ouverture de montage 12 de la platine, par l'arrière de cette dernière, et on place l'élément de raccordement dans sa position de fixation. A cette fin, on engage les bords latéraux 17 de l'ouverture de fixation 13 dans les fentes latérales 10 de l'élément de raccordement et on fait coulisser l'élément de raccordement relativement à la platine le long desdits bords 17 jusqu'à ce que l'élément de raccordement soit en position de fixation. De préférence, le positionnement de la platine relativement à la cloison est prévu de façon à ce que l'élément de raccordement soit en butée contre le bord inférieur 19 de l'ouverture de fixation 13 lorsqu'il est en position de fixation. Mais il est aussi possible, grâce à la forme oblongue de l'ouverture de fixation 13, d'ajuster verticalement la position de fixation de l'élément de raccordement, en fonction du positionnement final de la platine. Cette possibilité d'ajustement est avantageuse dans le cas d'un robinet double tel le robinet 20 ; elle permet de compenser un positionnement imparfait de la platine en termes de niveau horizontal ;
- on fixe la platine contre la face frontale 14 de la paroi 2 à l'aide de vis ;
- après avoir éventuellement ajusté en hauteur la position de l'élément de raccordement 3, on visse l'écrou 5 sur le filetage 9 de la partie avant de l'élément de raccordement ; en fin de vissage, la platine 4 est serrée entre la face arrière de l'écrou et une face, dite face postérieure, des fentes latérales 10 de l'élément de raccordement, ce qui assure un maintien ferme de l'élément de raccordement sur la platine. A noter que l'étape de fixation de la platine 4 sur la cloison peut être exécutée après la mise en place de l'écrou 5 ;
- on réalise un revêtement de finition sur la paroi 2, par exemple par collage d'un revêtement de type faïence ou carrelage 22. Le revêtement est posé de façon à venir recouvrir la platine 4 tout autour de l'écrou 5. Si l'écrou (en l'occurrence son embase 23) ne masque pas totalement la lumière de raccordement 11, il convient de veiller à ce que le revêtement de finition ne vienne pas obturer ladite lumière 11. On notera que la zone de préhension 24 de l'écrou s'étend en saillie à l'avant du revêtement de finition 22. Une fois le revêtement posé, il est donc possible de venir dévisser l'écrou 5 aux fins de visite, de réparation ou de changement de l'élément de raccordement 3 ;
- on visse le cache 6 sur la partie avant 8 de l'élément de raccordement ; le cache vient ainsi cacher l'écrou 5 et le bord du revêtement de finition 22 autour de l'écrou.

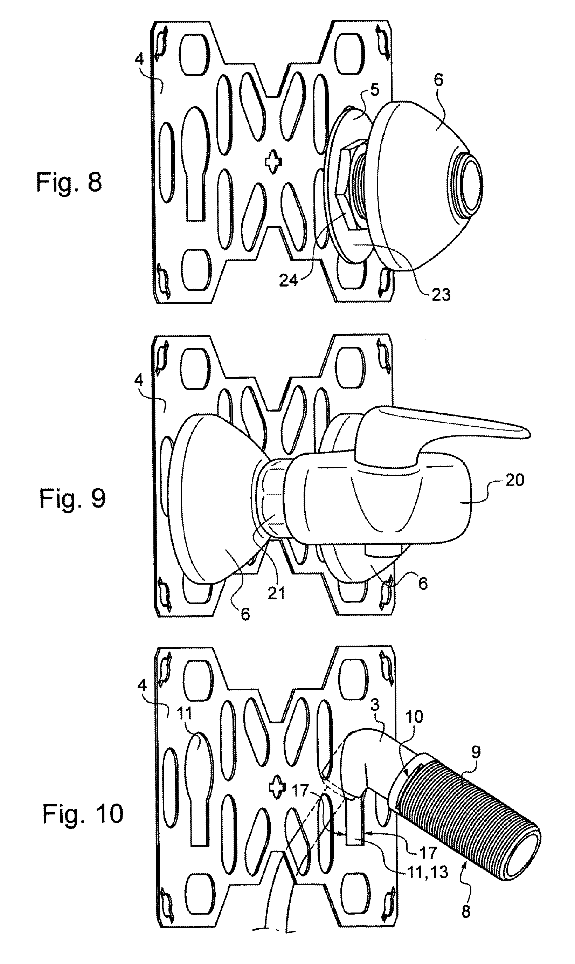

Pour visiter, réparer ou changer l'élément de raccordement selon l'invention, il suffit de retirer le robinet 20, retirer le cache 6, retirer l'écrou 5 (dont la zone de préhension hexagonale est accessible puisqu'elle s'étend à l'avant du revêtement de finition 22), puis de faire coulisser l'élément de raccordement 3 le long des bords latéraux 17 de l'ouverture de fixation 13 vers l'ouverture de montage 12 jusqu'à ce que ledit élément de raccordement puisse être retiré de la platine 4. L'élément de raccordement 3 est alors extrait de la cloison et ramené à l'avant de la paroi 2. On peut observer cette opération à la figure 10, où la paroi et le revêtement de finition ont été volontairement omis aux fins de clarté.

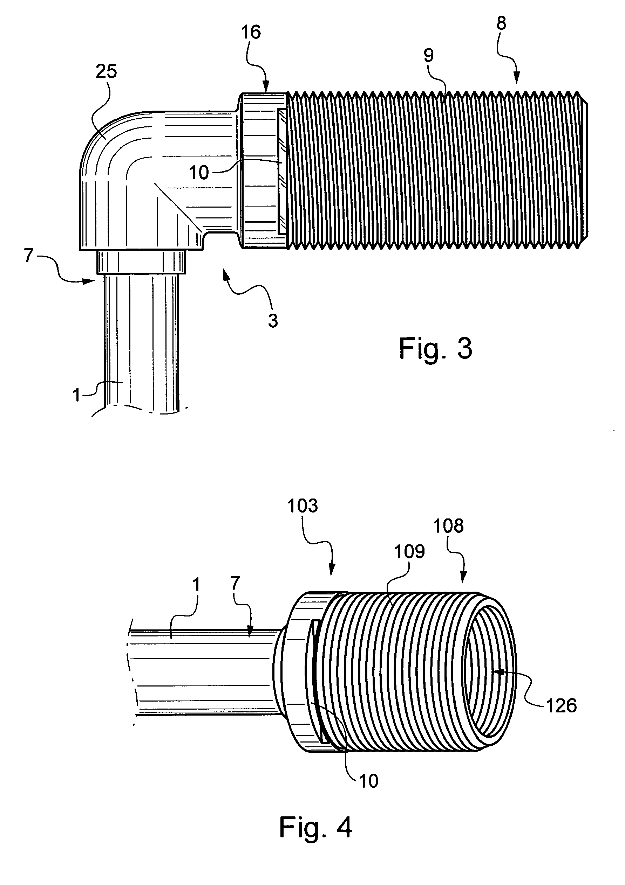

Les figures 1 et 4 illustrent un autre mode de réalisation d'un dispositif selon l'invention, qui permet le raccordement d'une conduite à un robinet de puisage. Ce mode de réalisation diffère de celui précédemment décrit en ce que :
- sa platine 104 présente une unique lumière de raccordement 111 en forme de trou de serrure,
- son élément de raccordement 103 est un élément droit (et non coudé),
- cet élément de raccordement 103 présente, à sa partie avant 108, d'une part un filetage extérieur 109 pour le vissage d'un cache tel le cache 6, et d'autre part un taraudage 126 (filetage interne femelle) destiné à recevoir l'extrémité filetée (mâle) d'un robinet de puisage, tel un robinet 15/21.

L'invention permet l'installation de tout type de robinet de douche, robinet mural encastré, robinet de puisage, etc.

L'invention peut faire l'objet de nombreuses variantes par rapport au mode de réalisation illustré, dès lors que ces variantes entrent dans le cadre délimité par les revendications.

Par exemple, la partie arrière de l'élément de raccordement, définie comme étant adaptée pour être montée sur l'extrémité libre d'une conduite, peut être conçue pour recevoir d'autres types de conduite, à sertir, à glissement ou à visser, à raccord intégré ou associé, mâle ou femelle...

En outre, les moyens de fixation de l'élément de raccordement à la platine ne sont pas limités aux moyens décrits et illustrés. Ces moyens sont toutefois avantageusement adaptés pour être accessibles depuis la face avant de la platine, en vue du démontage de l'élément de raccordement alors que la platine est fixée à la paroi. Par exemple, la fixation de l'élément de raccordement peut être réalisée à l'aide :
- d'une bride formée sur l'élément de raccordement et destinée à être plaquée contre la face avant de la platine,
- et de vis auto-taraudeuses agencées de façon à traverser ladite bride et à venir s'ancrer dans la platine.

Par ailleurs, le cache et l'écrou de fixation de l'élément de raccordement à la platine pourraient éventuellement être formés dans une seule et même pièce, sous réserve de prévoir une zone de préhension sur le cache aux fins du serrage de l'ensemble contre la platine.

## Revendications

1. Dispositif de raccordement pour le raccordement d'au moins une conduite (1) à la traversée d'une paroi (2), comprenant :
- au moins un élément de raccordement (3) comportant d'une part une partie arrière (7) adaptée pour être montée sur une extrémité libre de la conduite, et d'autre part une partie avant (8),
- une platine (4) adaptée pour être fixée contre une face frontale (14) de la paroi, ladite platine présentant au moins une lumière (11), dite lumière de raccordement, destinée à recevoir l'élément de raccordement, **caractérisé en ce que** ladite lumière de raccordement (11) présente :
- une portion (13), dite ouverture de fixation, adaptée pour permettre la fixation de l'élément de raccordement (3) dans une position, dite position de fixation, dans laquelle sa partie arrière (7) s'étend à l'arrière de la platine et sa partie avant (8) s'étend à l'avant de la platine,
- une portion (12), dite ouverture de montage, de plus grande dimension que l'ouverture de fixation et adaptée pour permettre le passage de l'élément de raccordement dans son intégralité,
et **en ce que** ledit dispositif comprend des moyens de fixation de l'élément de raccordement à la platine.

2. Dispositif selon la revendication 1, **caractérisé en ce que** la lumière de raccordement (11) présente la forme d'un trou de serrure, l'ouverture de montage (12) étant globalement circulaire et l'ouverture de fixation (13) étant globalement rectangulaire.

3. Dispositif selon l'une des revendications 1 ou 2, **caractérisé en ce que** les moyens de fixation comprennent :
- une collerette formée sur l'élément de raccordement et adaptée pour venir en appui contre une face arrière de la platine lorsque l'élément de raccordement est en position de fixation,
- un écrou (5) adapté pour être vissé sur un filetage extérieur (9) correspondant ménagé sur la partie avant (8) de l'élément de raccordement et pour venir pincer la platine en coopération avec la collerette.

4. Dispositif selon l'une des revendications 1 ou 2, **caractérisé en ce que** ces moyens de fixation comprennent :
- deux fentes latérales (10) en regard transversalement l'une de l'autre, ménagées dans une partie centrale (16) de l'élément de raccordement, lesdites fentes étant adaptées pour recevoir deux bords (17) opposés de l'ouverture de fixation (13),
- un écrou (5) adapté pour être vissé sur un filetage extérieur (9) correspondant ménagé sur la partie avant (8) de l'élément de raccordement et pour venir pincer la platine en coopération avec une face postérieure de chacune des fentes (10).

5. Dispositif selon l'une des revendications 1 à 4, **caractérisé en ce que** la partie avant (8) de l'élément de raccordement présente un filetage extérieur (9) et une longueur adaptés pour permettre le montage direct d'un robinet (20) à raccord femelle.

6. Dispositif selon l'une des revendications 1 à 5, **caractérisé en ce que** la partie avant (108) de l'élément de raccordement présente un taraudage (126) pour le montage direct d'un robinet à raccord mâle.

7. Dispositif selon l'une des revendications 1 à 6, **caractérisé en ce qu'**il comporte un cache (6) adapté pour être monté sur la partie avant (8) de l'élément de raccordement et pour venir obturer totalement la lumière de raccordement (11) lorsque l'élément de raccordement est en position de fixation.

8. Procédé de raccordement d'au moins une conduite (1) s'étendant à l'arrière d'une paroi (2), dans lequel :
- on ramène une extrémité libre de la conduite (1) à l'avant de la paroi (2), en passant ladite extrémité libre à travers une découpe (18) préalablement ménagée dans ladite paroi,
- on raccorde une partie arrière (7) d'un élément de raccordement (3) à cette extrémité libre de la conduite,
- on utilise une platine (4) qui est adaptée pour être fixée contre une face frontale (14) de la paroi et qui présente au moins une lumière (11), dite lumière de raccordement, destinée à recevoir l'élément de raccordement, **caractérisé en ce que** :
- on utilise une platine (4) dont la lumière de raccordement (11) présente
◆ une portion (13), dite ouverture de fixation, adaptée pour permettre la fixation de l'élément de raccordement (3) dans une position, dite position de fixation, dans laquelle la partie arrière (7) de l'élément de raccordement s'étend à l'arrière de la platine et une partie avant (8) dudit élément de raccordement s'étend à l'avant de la platine,
◆ une portion (12), dite ouverture de montage, de plus grande dimension que l'ouverture de fixation (13) et adaptée pour permettre le passage de l'élément de raccordement (3) dans son intégralité,
- on insère l'élément de raccordement (3) dans l'ouverture de montage (12) et on déplace l'élément de raccordement depuis cette ouverture de montage vers l'ouverture de fixation (13), de façon à placer l'élément de raccordement dans sa position de fixation,
- on fixe la platine (4) contre la face frontale (14) de la paroi, et
- on fixe l'élément de raccordement à la platine.

9. Procédé selon la revendication 8, **caractérisé en ce que** :
- on utilise un élément de raccordement (3) comprenant
◆ deux fentes latérales (10) en regard transversalement l'une de l'autre ménagées dans une partie centrale (16) de l'élément de raccordement, lesdites fentes étant adaptées pour recevoir deux bords (17) opposés de l'ouverture de fixation (13),
◆ un filetage extérieur (9) ménagé sur sa partie avant (8),
- pour le placement de l'élément de raccordement (3) en position de fixation, on insère et on fait coulisser les bords (17) de l'ouverture de fixation dans les fentes latérales (10) de l'élément de raccordement,
- lorsque l'élément de raccordement est en position de fixation, on visse un écrou (5) correspondant sur le filetage extérieur (9) de l'élément de raccordement, jusqu'à ce que ledit écrou vienne pincer la platine (4) en coopération avec une face postérieure des fentes latérales (10) de l'élément de raccordement.

10. Procédé de visite ou de démontage d'un dispositif de raccordement selon l'une des revendications 1 à 7, ledit dispositif étant monté conformément au procédé selon l'une des revendications 8 ou 9, **caractérisé en ce que** :
- le cas échéant, on dévisse l'écrou (5) de façon à libérer la platine,
- on déplace l'élément de raccordement (3) depuis sa position de fixation vers l'ouverture de montage (12) et on extrait l'élément de raccordement hors de la platine (4) par ladite ouverture de montage.
